(19) **Europäisches Patentamt / European Patent Office / Office européen des brevets**

(11) **EP 2 762 912 B1**

(12) **FASCICULE DE BREVET EUROPEEN**

(45) Date de publication et mention de la délivrance du brevet:
**02.11.2016 Bulletin 2016/44**

(51) Int Cl.:
*G01S 5/04* *(2006.01)*      *G01S 3/18* *(2006.01)*
*G01S 3/30* *(2006.01)*      *G01S 19/21* *(2010.01)*

(21) Numéro de dépôt: **14152993.3**

(22) Date de dépôt: **29.01.2014**

(54) **Dispositif et procédé de collecte de données pour la localisation d'une source d'interférence**

Vorrichtung und Verfahren zur Datenerfassung für die Lokalisierung einer Störquelle

Device and method for collecting data for locating a source of interference

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.01.2013 FR 1350841**

(43) Date de publication de la demande:
**06.08.2014 Bulletin 2014/32**

(73) Titulaire: **Eutelsat S.A.**
**75015 Paris (FR)**

(72) Inventeurs:
• **Le Pera, Alessandro**
**92130 Issy-Les-Moulineaux (FR)**
• **Fenech, Hector**
**92130 Issy-Les-Moulineaux (FR)**
• **Amos, Sonya**
**75015 Paris (FR)**

(74) Mandataire: **Lebkiri, Alexandre**
**Cabinet Camus Lebkiri**
**25, Rue de Maubeuge**
**75009 Paris (FR)**

(56) Documents cités:
**FR-A1- 2 125 394      FR-A1- 2 436 402**
**FR-A1- 2 819 657      US-B1- 6 727 840**

**Description**

## DOMAINE TECHNIQUE

La présente invention concerne un dispositif destiné à être embarqué à bord d'un satellite et permettant de collecter des données permettant la localisation d'une source d'interférence.

## ETAT DE LA TECHNIQUE ANTERIEUR

Des interférences peuvent apparaître sur des canaux de communication satellites. Il est souvent nécessaire de détecter la source qui génère ces interférences afin de faire stopper l'interférence. Pour cela, l'état de la technique utilise généralement un dispositif de localisation de la source d'interférence qui est situé au sol et qui utilise les données provenant de deux satellites voisins qui partagent une bande de fréquences et qui sont en communication avec le dispositif de localisation.

Par conséquent, il est nécessaire avec les dispositifs de localisation de l'art antérieur d'avoir deux satellites voisins qui utilisent la même bande de fréquence pour pouvoir collecter les données permettant de localiser une source d'interférence. Le traitement de ces données est ensuite effectué au sol, ce qui peut poser des problèmes de confidentialité et de sécurité.

Le document FR 2 819 657 divulgue un dispositif de localisation destiné à être embarqué sur un satellite géostationnaire, permettant la détection d'émetteurs de brouillage terrestres. Le dispositif comporte une antenne qui présente trois dipôles orthogonaux, susceptibles de réceptionner en polarisation linéaire trois composantes orthogonale.

## EXPOSE DE L'INVENTION

L'invention vise à remédier aux inconvénients de l'état de la technique en proposant un dispositif de collecte de données permettant la localisation d'une source d'interférence qui ne nécessite pas l'utilisation des données provenant d'un satellite voisin.

L'invention vise également à proposer un dispositif de collecte de données permettant la localisation d'une source d'interférence qui est destiné être embarqué sur un satellite.

L'invention vise également à proposer un dispositif de collecte de données pour la localisation d'une source d'interférence qui soit simple et optimisé en masse et en coût. Pour ce faire, est proposé selon un premier aspect de l'invention, un dispositif de collecte de données permettant la localisation d'une source d'interférences dans une surface cible lorsque l'on connait la fréquence de l'interférence au sol, le dispositif de collecte de données étant destiné à être embarqué sur un satellite. Le dispositif de collecte de données selon l'invention est défini dans la revendication 1. Le procédé de collecte de données correspondant est défini dans la revendication 8.

Ainsi, contrairement aux dispositifs de collectes de données de l'art antérieur qui sont destinés à être au sol, le dispositif de collecte de données selon l'invention est destiné à être embarqué sur le satellite, ce qui est particulièrement avantageux dans le cas de satellites militaires ou gouvernementaux puisqu'ainsi, le satellite peut être totalement autonome.

Par ailleurs, grâce à la présence des trois points antennes sur le satellite, la position de la source d'interférence peut être déterminée sans utiliser les données provenant d'un autre satellite, ce qui est très avantageux lorsqu'on veut détecter la source d'interférence et qu'il n'y a pas d'autre satellite à proximité de notre satellite, ou qu'il n'y a pas d'autre satellite qui utilise la même bande de fréquence que notre satellite. Le dispositif de collecte de données selon l'invention permet essentiellement de localiser les sources d'interférences qui émettent :

- des ondes porteuses, c'est-à-dire que l'interférence forme une seule ligne spectrale qui est superposée sur le canal de communication du satellite ;
- des signaux modulés, pour lesquels une modulation est appliquée sur l'onde porteuse de l'interférence. Cette modulation est généralement à bande étroite par rapport au canal de communication du satellite, toutefois, lorsqu'elle n'est pas intentionnelle, elle peut occuper tout le canal de communication du satellite.
- Un signal où la fréquence a une variation lente, pratiquement un signal à onde continue (CW) où la fréquence porteuse change à un rythme de quelques kHz par seconde.

Selon différents modes de réalisation, la surface cible peut être toute la surface de la terre qui est face au satellite. Dans ce cas, les trois points antennes sont disposés de façon à capter une onde d'interférence quelle que soit sa provenance sur la terre. Toutefois, on pourrait également imaginer de ne surveiller qu'une partie de la surface de la terre qui fait face au satellite, ce qui permettrait d'avoir une localisation plus précise de la source d'interférence dans la surface cible.

Selon un mode de réalisation préférentiel, les points antennes sont disposés de façon à former un triangle équilatéral, ce qui permet d'effectuer une surveillance symétrique de la surface cible.

La fréquence au sol de l'interférence est de préférence transmise au dispositif de collecte de données par télémétrie, de sorte que les moyens de réception de la fréquence au sol de l'interférence sont de préférence des moyens de réception télémétriques.

Selon différents modes de réalisation :

- chaque point antenne peut être formé par une antenne cornet, ce qui est plus simple à réaliser ou alors
- les trois points antenne peuvent être formés par une seule antenne cornet qui est déplacée de façon à constituer les trois points antennes successivement, ce qui permet d'économiser le nombre d'antennes cornetsutilisées, mais qui nécessitent des moyens de déplacement de l'antenne cornet.

Par ailleurs, si on veut augmenter la précision de la localisation de la source d'interférence, on peut augmenter le nombre de points antennes du dispositif de collecte de données.

Selon différents modes de réalisation :

- chaque point antenne est de préférence large bande, de façon à pouvoir recevoir une large gamme de signaux d'interférence ;
- chaque point antenne présente de préférence une polarisation fixe ;
- chaque point antenne présente de préférence deux directions de polarisation. Dans ce cas, l'amplitude de l'interférence au niveau de chaque point antenne est de préférence déterminée selon chacune de ces directions de polarisation, ce qui permet de localiser une plus grande gamme de sources d'interférence ;
- chaque point antenne présente de préférence une courbe de gain triangulaire de façon à avoir une pente de gain constante sur toute la bande de fréquence couverte par le point antenne, ce qui permet une détermination plus précise de la position de la source d'interférences ;
- chaque point antenne présente de préférence une courbe de gain qui présente une pente d'environ 2 dB par degré, avec un maximum autour de 25 dBi, de façon à ce que le point antenne présente un gain de 0 dBi à 13°, ce qui permet de couvrir l'ensemble de la surface terre ;
- chaque point antenne présente de préférenceun niveau de polarisation croisée supérieur ou égal à 27 dB, de façon à ne pas dégrader la précision de localisation de la source d'interférence ;
- chaque point antenne présente de préférence une stabilité thermique et mécanique de façon à avoir une localisation précise de la source d'interférence malgré les fluctuations thermiques ou l'usure du temps.

Dans le cas où chaque point antenne présente deux directions de polarisation, deux signaux sont reçus par chacun des points antennes, chacun de ces signaux pouvant être traités par les moyens de traitement de façon à déterminer, dans chaque direction de polarisation, l'amplitude du signal d'interférence au niveau de chacun des points antennes. Dans ce cas, le dispositif de collecte de données génère deux fois plus de données d'amplitudes qu'il y a de points antennes.

Selon différents modes de réalisation, les moyens de traitement peuvent comporter autant de lignes de traitement qu'il y a de signaux à traiter, ou alors ils peuvent comprendre une seule ligne de traitement et des moyens de connexion qui permettent de connecter successivement chacune des sorties des points antennes à la ligne de traitement. Le fait d'avoir une seule et même ligne de traitement pour traiter tous les signaux issus des points antennes permet, outre une économie de moyen, de pouvoir détecter d'éventuelles erreurs ou imprécisions dans les mesures et dans les calculs plus facilement, et de pouvoir calibrer le dispositif de collecte plus facilement.

Avantageusement, les moyens de traitement comportent :

- un filtre agile apte à sélectionner une bande de fréquence cible dans le signal reçu par un des points antennes et à le convertir en un signal présentant une bande de fréquence intermédiaire, la bande de fréquence cible contenant la fréquence au sol de l'interférence ;
- des moyens de traitement numérique aptes à :

  o convertir le signal présentant une bande de fréquence intermédiaire en un signal numérique et
  o déterminer un panier de fréquence dans lequel se trouve la fréquence de l'interférence au niveau du satellite ;
  o déterminer dans ce panier de fréquence, pour chacun des signaux reçus par chacun des points antennes, l'amplitude de l'interférence au niveau de chacun des points antennes.

Le filtre agile permet donc de sélectionner une bande de fréquence qui comprend la source d'interférence de façon à pouvoir l'analyser plus précisément. Pour cela, le filtre agile convertit une bande de signal dans laquelle se trouve le signal d'interférence en un signal de fréquence intermédiaire qui peut ensuite être numérisé et traité de façon à déterminer l'amplitude mesurée pour l'interférence au niveau de chaque point antenne. La position de la source d'interférence dans la surface cible peut ensuite être déterminée par triangulation.

Avantageusement, l'amplitude de l'interférence au niveau de chacun des points antennes est déterminée dans les deux directions de polarisation de chacun des points antenne, ce qui permet de localiser une plus grande gamme de sources d'interférence.

Par ailleurs, la détermination du panier de fréquence dans lequel se trouve la fréquence de l'interférence au niveau du satellite est de préférence effectuée par une transformée de Fourier rapide, ce qui est simple et présente l'avantage de pouvoir être automatisé. En outre, on peut augmenter la précision de la transformée de Fourier rapide en augmentant le nombre d'échantillons utilisé, tandis que la fréquence d'échantillonnage reste constante..La transformée de Fourier rapide permet d'appliquer des filtres successifs de plus en plus étroits sur le signal numérique de façon à déterminer un panier de fréquence de largeur choisie dans lequel se trouve la fréquence de l'interférence au niveau du satellite.

Avantageusement, le dispositif de collecte de données comporte en outre des moyens de transmission aptes à transmettre à des moyens de calcul les amplitudes de l'interférence déterminées au niveau de chacun des points antennes.

Selon différents modes de réalisation :

- de manière particulièrement avantageuse, les moyens de calculs peuvent être au sol, ce qui permet d'avoir un dispositif de collecte de données plus léger ; lorsque les moyens de calculs sont au sol, les moyens de transmission utilisent de préférence la télémétrie pour transmettre les amplitudes de l'interférence déterminées au niveau de chacun des points antennes au moyen de calcul ;
- les moyens de calculs peuvent faire partie du dispositif de collecte de données et dans ce cas, le dispositif de collecte de données est également un dispositif de localisation de la source d'interférence. Ainsi, le satellite peut être totalement autonome, ce qui augmente sa sécurité et sa confidentialité.

Selon un mode de réalisation, préférentiel, les moyens de calcul sont aptes à déterminer la position de la source d'interférence dans la surface cible par triangulation à l'aide des amplitudes du signal d'interférence mesurée au niveau de chacun des points antennes, ce qui permet une détermination précise et simple de la position de la source d'interférence.

Un deuxième aspect de l'invention concerne également l'utilisation des amplitudes déterminées par un ou deux dispositifs de collecte des données selon le premier aspect de l'invention pour déterminer la position d'une source d'interférence. En effet, même si un seul satellite est nécessaire pour rassembler les données nécessaires à la localisation d'une source d'interférence, les données issues de deux dispositifs de collecte de données, chacun d'eux étant embarqué sur un satellite, peuvent être utilisées, notamment pour augmenter la précision de la localisation de la source d'interférence. En outre, le fait d'utiliser les données issues de deux dispositifs de collecte de données selon le premier aspect de l'invention permet de mesurer la fréquence exacte à laquelle le signal d'interférence est reçu, afin de pouvoir appliquer la méthode de localisation en fréquence. En pratique, les deux satellites exploitent une fréquence Doppler différente du à leur mouvement, de sorte que la fréquence de liaison montante de l'interférente est reçue a une fréquence légèrement différente par les deux satellites. L'analyse de cette différence permet de localiser l'interférence (FDOA). Dans ce cas, les dispositifs de collecte de données selon l'invention permettent d'augmenter le nombre d'échantillons utilisés en rétrécissant le panier de fréquence utilisé de façon à mesurer précisément la fréquence de l'interférence au niveau du satellite.

Pour mettre en oeuvre le procédé de collecte de données permettant la localisation de la source d'interférence, l'interférence est d'abord reçue au sol. On détecte alors s'il s'agit d'une interférence néfaste ou non. Dans le cas où il s'agit d'une interférence néfaste, on mesure sa fréquence au sol et on détermine à quelle fréquence le signal d'interférence sera reçu au niveau du satellite. En d'autres termes, une station au niveau du sol doit détecter le signal d'interférence et commander le dispositif au niveau du satellite pour que celui-ci détermine au fréquence de l'interférence au niveau du satellite.

Selon un mode de réalisation, l'étape de détermination de l'amplitude de l'interférence au niveau de chacun des points antenne comporte les étapes suivantes:

- sélection dans le signal reçu par le premier point antenne d'une bande de fréquence cible contenant la fréquence au sol de l'interférence ;
- conversion de cette bande de fréquence cible en un signal présentant une bande de fréquence intermédiaire ;
- numérisation du signal présentant une bande de fréquence intermédiaire ;
- détermination d'un panier de fréquence dans lequel se trouve la fréquence de l'interférence au niveau du satellite ;
- détermination, dans ce panier de fréquence, et pour chacun des signaux reçus par chacun des points antennes, de l'amplitude de l'interférence au niveau de chacun des points antennes.

Avantageusement, la bande de fréquence cible présente une largeur de 1 MHz, ce qui permet, connaissant la fréquence au sol de l'interférence, d'être sûr de sélectionner la fréquence au niveau du satellite de l'interférence, tout en ne gardant qu'une faible quantité du signal en mémoire.

Avantageusement, l'étape de détermination d'un panier de fréquence dans lequel se trouve la fréquence de l'interférence au niveau du satellite est effectuée par une transformée de Fourier rapide.

Un quatrième aspect de l'invention concerne également un procédé de localisation d'une source d'interférence dans une surface cible par triangulation utilisant les amplitudes déterminées au niveau de chacun des points antennes à l'aide d'un procédé selon le troisième aspect de l'invention.

**BREVES DESCRIPTION DES FIGURES**

D'autres caractéristiques et avantages de l'invention ressortiront à la lecture de la description détaillée qui suit, en référence aux figures annexées, qui illustrent :

- La figure 1, une représentation schématique d'un dispositif selon un mode de réalisation de l'invention ;

- La figure 2, une courbe de gain des points antennes utilisés dans le dispositif de la figure 1 ;
- La figure 3, une cartographie de gain des points antennes du dispositif de la figure 1.

Pour plus de clarté, les éléments identiques ou similaires sont repérés par des signes de références identiques sur l'ensemble des figures.

## DESCRIPTION DETAILLEE D'AU MOINS UN MODE DE REALISATION

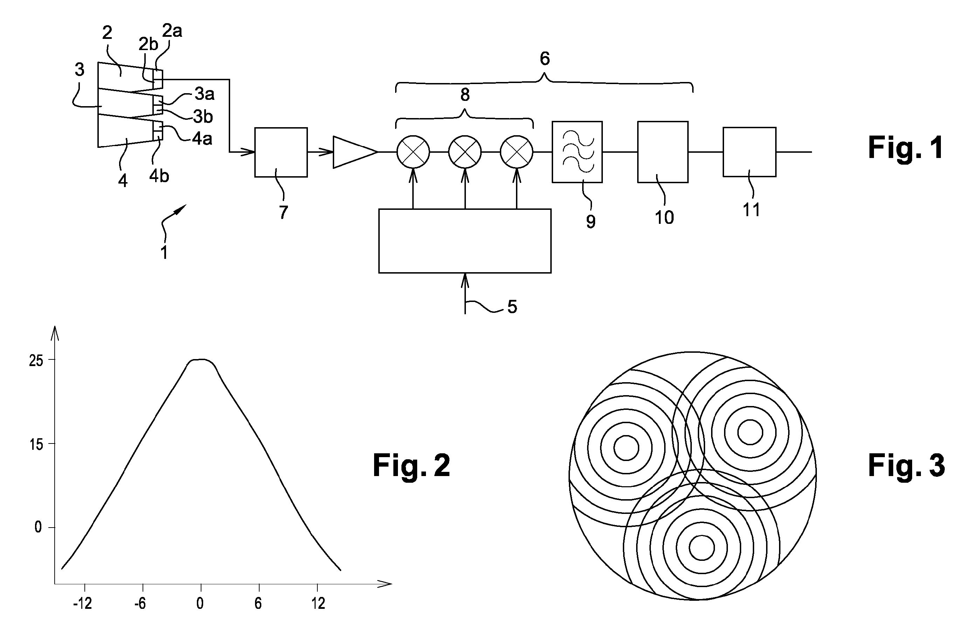

La figure 1 représente de manière schématique un dispositif 1 de collecte de données embarqué sur un satellite pour la localisation d'une source d'interférence dans une surface cible selon un mode de réalisation de l'invention. Dans ce mode de réalisation, la surface cible correspond à l'ensemble de la surface de la terre qui fait face au satellite.

Le dispositif 1 est embarqué sur un satellite. Le dispositif 1 comporte :

- des moyens de réception 5 aptes à recevoir la fréquence au sol de l'interférence ;
- au moins trois points antenne 2, 3, 4 disposés sur le satellite de façon à pouvoir recevoir un signal radiofréquence issu de la surface cible;
- des moyens de traitement 6 aptes à déterminer l'amplitude du signal d'interférence au niveau de chacun des points antennes 2, 3, 4;
- des moyens de connexion 7 aptes à connecter successivement chacun des points antennes aux moyens de traitement 6.

Dans ce mode de réalisation, les trois points antennes 2, 3, 4 sont chacun constitués d'une antenne cornet. Toutefois, l'invention n'est pas limitée à l'utilisation d'antennes cornets, ni à l'agencement des antennes 2, 3, 4 présentés ici. Ces trois antennes cornet sont assemblées rigidement sur le satellite de façon à éclairer l'ensemble de la surface de la terre comme on peut le voir sur la figure 3, qui représente une cartographie de gain des points antennes. Les trois points antennes forment un triangle équilatéral, chaque point antenne étant disposé sur un des sommets du triangle équilatéral.

La figure de gain de chacun de ces points antennes 2, 3, 4 est représentée sur la figure 2. Chaque point antenne présente un spectre de réception large bande afin de pouvoir recevoir une large gamme de signaux d'interférence, comme par exemple des signaux de la bande Ku ou « Kurz-unten », ou de la bande Ka « Kurtz-above ».

Par ailleurs, chaque point antenne présente une polarisation fixe. Chaque point antenne présente de préférence une double direction de polarisation de façon à être capable de localiser des sources d'interférence selon deux directions de polarisation. Par conséquent, chaque point antenne génère deux signaux en sortie : un premier signal selon sa première direction de polarisation, et un deuxième signal selon sa deuxième direction de polarisation. La première direction de polarisation est la même dans les trois points antennes, de même que la deuxième direction de polarisation est la même dans les trois points antennes.

Pour obtenir une double polarisation, les antennes cornet peuvent être alimentées par des transducteurs orthomodes OMT qui divisent le signal et permettent la formation de la polarisation orthogonale. On pourrait également envisager selon un autre mode de réalisation d'alimenter les antennes cornet par un polariseur, également appelé jonction orthomode ou OMJ de façon à obtenir une polarisation circulaire.

Chaque point antenne présente de préférence une courbe de gain triangulaire et constante en fonction de la fréquence, comme représenté sur la figure 2, de façon à ce que le gain soit constant pour une ouverture angulaire donnée. La courbe de gain représentée sur la figure 2 est fournie à titre illustrative uniquement et l'invention n'est pas limitée à ce type de courbe de gain. Toutefois la courbe de gain doit être connue et reproductible par les trois antennes cornet. La courbe de gain présente un maximum proche de 25 dBi, et une pente de chaque côté de ce maximum d'environ 2 dB par degré de façon à ce que chaque point antenne puisse présenter un gain de 0 dBi pour une ouverture angulaire de 13°, ce qui correspond à la couverture de la terre. Ainsi, en utilisant ces trois points antennes disposés selon un triangle équilatéral, on obtient des lignes de gain représentées sur la figure 3.

Par ailleurs, chaque point antenne présente de préférence un niveau de polarisation croisée supérieur ou égal à 27 dB de façon à ne pas dégrader la précision de la mesure. En outre, chacune des antennes cornet est stable thermiquement et mécaniquement. En outre, les évolutions éventuelles des performances en terme de gain des trois antennes cornet doivent avoir lieu dans le même sens et dans les mêmes proportions de façon à ce que la détermination de la position de la source d'interférence reste précise.

Par ailleurs, chaque point antenne 2, 3, 4 présente deux sorties 2a, 2b, 3a, 3b, 4a, 4b, une pour chaque direction de polarisation et un filtre est disposé sur chacune des sorties du polariseur ou de l'arrangement OMT (transducteur orthomode) de chacune des antennes cornet.

Les moyens de connexion 7 sont agencés de façon à pouvoir connecter successivement les deux sorties 2a, 2b, 3a, 3b, 4a, 4b de chacun des points antennes 2, 3, 4 aux moyens de traitement. Ainsi, les moyens de traitement 6 peuvent traiter successivement les deux signaux de sortie de chacun des trois points antennes 2, 3, 4. Par conséquent, grâce aux moyens de connexion 7, les même moyens de traitement 6 peuvent traiter les six signaux générés par les trois points antennes 2, 3, 4.

Les moyens de traitement 6 comprennent :

- un filtre agile 8 ;
- un filtre anti distorsion 9 du signal ;
- des moyens de traitement numérique 10.

Le filtre agile 8 permet de sélectionner une bande de fréquence cible centrée autour de la fréquence au sol de l'interférence dans le signal reçu par un des points antennes. Ce signal est ensuite converti en un signal pouvant être traité par les moyens de traitement numérique 10. Pour cela, la bande de fréquence cible est convertie en une bande de fréquence intermédiaire.

Plus précisément, dans ce mode de réalisation, le filtre agile 8 permet de sélectionner dans un des signaux reçu par un des points antenne une bande de fréquence de 1 Mhz qui contient la fréquence au sol de l'interférence. La bande de fréquence de 1 MHz est de préférence centrée autour de la fréquence au sol de l'interférence. Cette bande de fréquence de 1 MHz peut se trouver n'importe où dans le spectre de fréquence. En effet, elle peut se trouver dans les canaux de communication du satellite ou en dehors, afin de pouvoir localiser n'importe quelle source d'interférence, y compris des sources d'interférence pour des satellites voisins. Cette bande de fréquence est ensuite convertie en un signal sur lequel un filtrage bande étroite peut être appliqué. Pour cela, la conversion a lieu en trois étapes :

- tout d'abord une première conversion agile convertit le canal de fréquence d'intérêt en un signal de fréquence intermédiaire haute. Par exemple, si un signal Ku FSS de fréquence comprise entre 13 et 14,5 GHz arrive, un canal de 33 MHz peut être converti en une fréquence Ku comprise entre 10,95 et 11,70 GHz de façon à pouvoir être filtrée par des technologies conventionnelles. Le filtre agile est capable de sélectionner n'importe quelle bande de 33 MHz de large dans le signal d'entrée ;
- une fois cette première conversion effectuée, une seconde conversion est effectuée de façon à avoir un signal de fréquence intermédiaire basse qui peut être filtrée en bande étroite. Pour cela, une conversion en deux étapes est effectuée : la première étape de conversion doit être agile afin de sélectionner 1 MHz dans le canal de 33 MHz sélectionné à l'étape précédente. La deuxième étape de conversion est fixe et elle permet de convertir le signal de 1 MHz en un signal à une fréquence à laquelle l'échantillonnage peut avoir lieu.

En outre, un filtrage de réjection d'image ou « proper image rejection filtering» est de préférence appliqué lors de chaque étape de conversion de façon à ne pas dégrader le signal d'intérêt et donc de ne pas diminuer la précision de la localisation de la source d'interférence.

Les moyens de traitement numérique 10 permettent ensuite de déterminer l'amplitude de l'interférence au niveau de chacun des points antennes et selon chacune des directions de polarisation. Pour cela, les moyens de traitement numérique 10 sont aptes à :

- convertir le signal présentant une bande de fréquence intermédiaire en un signal numérique et

- appliquer des filtres successifs sur le signal numérique de façon à déterminer le panier de fréquence dans lequel se trouve la fréquence de l'interférence au niveau du satellite ;

- déterminer dans ce panier de fréquence, pour chacun des signaux reçus par chacun des points antennes, l'amplitude de l'interférence au niveau de chacun des points antennes.

Plus précisément, dans ce mode de réalisation, les moyens de traitement numérique effectuent tout d'abord l'échantillonnage du signal analogue à une conversion analogique numérique et appliquent une transformée de Fourier rapide. L'expression d'une transformée de Fourier rapide est donnée par :

$$X_k = \sum_{n=0}^{N-1} x_n \cdot e^{-\frac{2\pi i}{N}kn}$$

Où N est le nombre d'échantillons accumulés pour effectuer la transformée de Fourier et K le panier de fréquence considéré. La transformée de Fourier rapide est particulièrement avantageuse car elle permet d'automatiser la détermination de l'amplitude au niveau de chacun des points antennes. En outre, la précision de la détermination de l'amplitude peut être choisie en réduisant la largeur du panier de fréquence obtenu en fin de traitement numérique. Pour cela, le nombre d'échantillons doit être augmenté, ce qui peut être effectué en augmentant le temps d'accumulation. Toutefois, la durée de détermination de l'amplitude ne doit être trop longue pour que l'interférence puisse être considérée comme stationnaire. Selon un mode de réalisation préférentiel, la précision de la mesure est supérieure à 0,1 dB.

Ainsi, selon l'invention, un premier signal issu d'un premier des points antennes est traité par le filtre agile puis par les moyens de traitement numérique de façon à déterminer le panier de fréquence dans lequel se trouve la fréquence de l'interférence au niveau du satellite. Une fois ce panier de fréquence déterminé, il peut être utilisé pour déterminer l'amplitude de l'interférence au niveau de ce premier point antenne et selon cette première direction de polarisation. En outre, pour les autres points antennes et pour l'autre direction de polarisation du même point antenne, on peut se placer directement dans ce panier de fréquence pour déterminer l'amplitude de l'interférence, sans avoir à déterminer à nouveau ce panier de fréquence. En d'autres termes, la première mesure du signal d'interférence permet de :

- déterminer la fréquence exacte du signal d'interférence au niveau du satellite ;
- déterminer l'amplitude du premier signal ;
- déterminer le panier de fréquence dans lequel se trouve la fréquence de l'interférence au niveau du satellite.et l'amplitude de l'interférence au niveau de ce premier point antenne.

Une fois que les amplitudes au niveau de chaque point antenne et selon chaque direction de polarisation ont été déterminées, elles peuvent être utilisées pour calculer la position de la source d'interférence dans la surface cible par triangulation. Ce calcul peut se faire directement à l'intérieur du dispositif de collecte de données embarqué à bord du satellite, ou alors il peut avantageusement se faire à l'intérieur de moyens de calculs additionnels, qui peuvent par exemple être à terre. Dans ce cas, les amplitudes calculées sont transmises à ces moyens de calcul additionnels, de préférence par télémétrie, par des moyens de transmission 11.

Afin d'améliorer la précision de la localisation de la source d'interférence, il est possible de calibrer le dispositif selon l'invention. Cette calibration peut avoir lieu à l'intérieur du dispositif de collecte de données. Pour cela, une source d'interférence de calibration peut par exemple émettre de façon à ce que son signal soit reçu par les trois points antennes et l'amplitude de cette interférence est mesurée indépendamment par les trois points antennes. La position de la source d'interférence est ensuite calculée et comparée avec la position réelle de la source d'interférence. Les éléments constituants du dispositif de collecte de données sont ensuite réglés de manière à améliorer la précision de la localisation de la source d'interférence.

Une autre solution de calibration peut consister à envoyer un signal pilote de fréquence connue et de position connue vers le dispositif de collecte de données.

Naturellement, l'invention n'est pas limitée aux modes de réalisation décrite en référence aux figures et des variantes pourraient être envisagées sans sortir du cadre de l'invention. Ainsi, le nombre de points antennes peut être augmenté de façon à augmenter la précision de la mesure. On pourrait également utiliser un arrangement en forme d'étoile dans lequel un faisceau central serait entouré par trois faisceaux émis par trois antennes cornets ou plus. On pourrait par exemple utiliser cinq antennes cornets, une de ces antennes cornets étant disposée au centre d'un carré formé par les quatre autres antennes cornets.

On peut également diminuer la surface cible pour augmenter la précision de la mesure. Par ailleurs, la solution précédente a été conçue afin de réaliser un gain de masse tout en ayant une configuration simple.

Toutefois, d'autres configurations pourraient être adoptées sans sortir du cadre de l'invention. Ainsi, dans la solution détaillée précédemment, le dispositif couvrait l'ensemble de la terre. Toutefois, on pourrait également envisager d'avoir plusieurs faisceaux directionnels qui utilisent un gain augmenté. Dans ce cas, comme dans le cas décrit précédemment, la courbe de gain des antennes cornets doit être connue et reproductible pour permettre des calculs précis. Si on veut couvrir l'ensemble de la terre, un système de braquage (également appelé « gimballing system » en anglais) est appliqué à l'ensemble des antennes cornets. Les systèmes de braquage sont connus et peuvent être montés sur un support de montage tandis qu'une plaque de base supporte le système d'alimentation.

Selon un autre mode de réalisation, on pourrait également envisager d'utiliser un réflecteur. Le système de braquage pourrait alors être appliqué au réflecteur, ou à l'ensemble d'antennes.

Ainsi, les différents modes de réalisation de l'invention permettent le balayage de la source d'interférence. Par ailleurs, afin d'avoir un dispositif léger, le réflecteur présente de préférence une ouverture de petites dimensions.

Par ailleurs, on pourrait également utiliser une ligne de traitement pour chaque sortie de chaque point antenne, de façon à pouvoir réaliser toutes les déterminations d'amplitudes simultanément, ce qui augmenterait également la précision de la mesure. Une autre amélioration possible serait d'augmenter la largeur de la bande de fréquence sélectionnée par le filtre agile à plusieurs mégahertz de façon à pouvoir détecter des interférences modulées.

Par ailleurs, on pourrait également envisager d'utiliser les amplitudes déterminées par plusieurs dispositifs de collecte de données selon l'invention, ces dispositifs de collecte de données étant embarqués sur des satellites différents, pour déterminer la position de la source d'interférence de façon plus précise.

## Revendications

1. Dispositif (1) de collecte de données permettant la localisation d'une source d'interférence dans une surface cible lorsque l'on connait la fréquence de l'interférence au sol, le dispositif de collecte de données étant destiné à être embarqué sur un satellite, le dispositif de collecte de données comportant:

   - des moyens de réception (5) télémétriques aptes à recevoir par télémétrie la fréquence au sol de l'interférence ;
   - au moins trois points antenne (2, 3, 4) disposés sur le satellite de façon à pouvoir recevoir un signal radiofréquence issu de la surface cible;
   - des moyens de traitement (6) aptes à déterminer l'amplitude du signal d'interférence au niveau de chacun des points antennes (2, 3, 4), les moyens de traitement comportant :

 o un filtre agile (8) apte à sélectionner une bande de fréquence cible dans le signal reçu par un des points antennes (2, 3, 4) et à le convertir en un signal présentant une bande de fréquence intermédiaire, la bande de fréquence cible contenant la fréquence au sol de l'interférence ;
 o des moyens de traitement numérique (10) aptes à :

  ■ convertir le signal présentant une bande de fréquence intermédiaire en un signal numérique et
  ■ déterminer un panier de fréquence dans lequel se trouve la fréquence de l'interférence au niveau du satellite ;
  ■ déterminer, dans ce panier de fréquence, pour chacun des signaux reçus par chacun des points antennes (2, 3, 4), l'amplitude de l'interférence au niveau de chacun des points antennes (2, 3, 4) ;

 - des moyens de connexion (7) aptes à connecter chacun des points antennes (2, 3, 4) aux moyens de traitement (6).

**2.** Dispositif de collecte de données selon la revendication précédente, comportant en outre des moyens de transmission (11) aptes à transmettre à des moyens de calcul les amplitudes de l'interférence déterminées au niveau de chacun des points antennes (2, 3, 4).

**3.** Dispositif de collecte de données selon l'une des revendications précédentes, comportant en outre des moyens de calcul aptes à déterminer la position de la source d'interférence dans la surface cible par triangulation à l'aide des amplitudes du signal d'interférence mesurées au niveau de chacun des points antennes

**4.** Dispositif de collecte de données selon l'une des revendications précédentes, dans lequel chaque point antenne (2, 3, 4) présente une courbe de gain triangulaire.

**5.** Dispositif de collecte de données selon l'une des revendications précédentes, dans lequel chaque point antenne (2, 3, 4) présente un niveau de polarisation croisée supérieur ou égal à 27 dB.

**6.** Dispositif de collecte de données selon l'une des revendications précédentes, dans lequel chaque point antenne (2, 3, 4) présente deux directions de polarisation.

**7.** Dispositif de collecte de données selon la revendication précédente, dans lequel l'amplitude de l'interférence au niveau de chacun des points antennes (2, 3, 4) est déterminée dans les deux directions de polarisation de chacun des points antenne (2, 3, 4).

**8.** Dispositif de collecte de données selon l'une des revendications précédentes, dans lequel chaque point antenne (2, 3, 4) est constitué d'une antenne cornet.

**9.** Procédé de collecte de données permettant la localisation d'une source d'interférences dans une surface cible à l'aide de trois points antennes (2, 3, 4) disposés sur un satellite de façon à pouvoir recevoir un signal radiofréquence sur l'ensemble de la surface cible, le procédé comportant les étapes suivantes :

 - réception par télémétrie de la fréquence au sol de l'interférence ;
 - réception par chaque point antenne d'un signal radiofréquence comportant le signal d'interférence dont on veut localiser la source ; détermination de l'amplitude de l'interférence au niveau de chacun des points antenne, l'étape de détermination de l'amplitude de l'interférence au niveau de chacun des points antenne (2, 3, 4) comportant les étapes suivantes :

  - sélection dans le signal reçu par le premier point antenne d'une bande de fréquence cible contenant la fréquence au sol de l'interférence ;
  - conversion de cette bande de fréquence cible en un signal présentant une bande de fréquence intermédiaire ;
  - numérisation du signal présentant une bande de fréquence intermédiaire ;
  - détermination d'un panier de fréquence dans lequel se trouve la fréquence de l'interférence au niveau du satellite ;
  - détermination, dans ce panier de fréquence, et pour chacun des signaux reçus par chacun des points antennes, de l'amplitude de l'interférence au niveau de chacun des points antennes.

**10.** Procédé selon la revendication précédente, dans lequel l'étape de détermination d'un panier de fréquence dans lequel se trouve la fréquence de l'interférence au niveau du satellite est effectuée par une transformée de Fourier rapide.

**11.** Procédé de localisation d'une source d'interférence dans une surface cible par triangulation utilisant les amplitudes déterminées au niveau de chacun des points antennes à l'aide d'un procédé selon l'une des revendications 9 à 10.

**Patentansprüche**

1. Datenerfassungsvorrichtung (1), die die Lokalisierung einer Interferenzquelle in einer Zieloberfläche zulässt, wenn die Frequenz der Schnittstelle am Boden bekannt ist, wobei die Datenerfassungsvorrichtung dazu bestimmt ist, auf einem Satelliten eingebaut zu werden, wobei die Datenerfassungsvorrichtung umfasst:

   - telemetrische Empfangsmittel (5), die geeignet sind, die Frequenz der Interferenz am Boden der Interferenz per Telemetrie zu empfangen;
   - wenigstens drei Antennenpunkte (2, 3, 4), die auf dem Satelliten derart angeordnet sind, dass ein aus der Zieloberfläche stammendes Funkfrequenzsignal empfangen werden kann;
   - Verarbeitungsmittel (6), die geeignet sind, die Amplitude des Interferenzsignals an jedem der Antennenpunkte (2, 3, 4) zu bestimmen, wobei die Verarbeitungsmittel umfassen:

      o einen agilen Filter (8), der geeignet ist, ein Ziel-Frequenzband in dem von einem der Antennenpunkte (2, 3, 4) empfangenen Signale auszuwählen und es in ein Signal umzuwandeln, das ein Zwischenfrequenzband aufweist, wobei das Ziel-Frequenzband die Frequenz der Interferenz am Boden enthält;
      o digitale Verarbeitungsmittel (10), die geeignet sind, um:

         ▪ das ein Zwischenfrequenzband aufweisende Signal in ein digitales Signal zu konvertieren und
         ▪ einen Frequenzbereich zu bestimmen, in dem sich die Frequenz der Schnittstelle beim Satelliten befindet;
         ▪ in diesem Frequenzbereich für jedes der von jedem der Antennenpunkte (2, 3, 4) empfangenen Signale die Amplitude der Interferenz an jedem der Antennenpunkte (2, 3, 4) zu bestimmen:

   - Anschlussmittel (7), die geeignet sind, jeden der Antennenpunkte (2, 3, 4) an Verarbeitungsmittel (6) anzuschließen.

2. Datenerfassungsvorrichtung gemäß dem voranstehenden Anspruch, darüber hinaus umfassend Übertragungsmittel (11), die geeignet sind, um die bei jedem der Antennenpunkte (2, 3, 4) bestimmten Amplituden der Interferenz auf Berechnungsmittel zu übertragen.

3. Datenerfassungsmittel gemäß einem der voranstehenden Ansprüche, darüber hinaus umfassend Berechnungsmittel, die geeignet sind, die Position der Interferenzquelle in der Zieloberfläche per Triangulation mithilfe der an jedem der Antennenpunkte gemessenen Amplituden des Interferenzsignals zu bestimmen.

4. Datenerfassungsmittel gemäß einem der voranstehenden Ansprüche, bei dem jeder Antennenpunkt (2, 3, 4) eine dreieckige Verstärkungskurve aufweist.

5. Datenerfassungsmittel gemäß einem der voranstehenden Ansprüche, bei dem jeder Antennenpunkt (2, 3, 4) ein Kreuzpolarisationsniveau größer als oder gleich 27 dB aufweist.

6. Datenerfassungsmittel gemäß einem der voranstehenden Ansprüche, bei dem jeder Antennenpunkt (2, 3, 4) zwei Polarisationsrichtungen aufweist.

7. Datenerfassungsmittel gemäß dem voranstehenden Anspruch, bei dem die Amplitude der Schnittstelle bei jedem der Antennenpunkte (2, 3, 4) in den zwei Polarisationsrichtungen jedes der Antennenpunkte (2, 3, 4) bestimmt wird.

8. Datenerfassungsvorrichtung gemäß einem der voranstehenden Ansprüche, bei dem jeder Antennenpunkt (2, 3, 4) aus einem Hornstrahler gebildet ist.

9. Datenerfassungsverfahren, das die Lokalisierung einer Interferenzquelle in einer Zieloberfläche mithilfe von drei Antennenpunkten (2, 3, 4) zulässt, die derart auf einem Satelliten angeordnet sind, dass sie ein Funkfrequenzsignal auf der gesamten Zieloberfläche empfangen können, wobei das Verfahren die folgenden Schritte umfasst:

   - Empfang der Frequenz am Boden der Interferenz per Telemetrie;
   - Empfang eines Funkfrequenzsignals, das das Interferenzsignal umfasst, dessen Quelle lokalisiert werden soll, durch jeden Antennenpunkt; Bestimmung der Amplitude der Interferenz an jedem Antennenpunkt, wobei der Bestimmungsschritt der Amplitude der Interferenz an jedem der Antennenpunkte (2, 3, 4) die folgenden Schritte umfasst:

      - Auswahl eines die Frequenz am Boden der Interferenz enthaltenden Ziel-Frequenzbandes in dem von dem ersten Antennenband empfangenen Signal;
      - Umwandlung dieses Ziel-Frequenzbandes in ein Signal, das ein Zwischenfrequenzband aufweist;
      - Digitalisierung des Signals, das ein Zwischen-Frequenzband aufweist;

- Bestimmung eines Frequenzbereichs, in dem sich die Frequenz der Schnittstelle am Satelliten befindet;
- Bestimmung der Amplitude der Interferenz an jedem der Antennenpunkte in diesem Frequenzbereich und für jedes der von jedem der Antennenpunkte empfangenen Signale.

10. Verfahren gemäß dem voranstehenden Anspruch, bei dem der Bestimmungsschritt eines Frequenzbereichs, in dem sich die Frequenz der Interferenz am Satelliten befindet, durch eine schnelle Fourier-Transformation gelöscht wird.

11. Lokalisierungsverfahren einer Interferenzquelle in einer Zieloberfläche per Triangulation, die Amplituden verwendet, welche an jedem der Antennenpunkte mithilfe eines Verfahrens gemäß einem der Ansprüche 9 bis 10 bestimmt werden.

**Claims**

1. A data collection device (1) for locating an interference source in a target area when the ground interference frequency is known, the data collection device being intended to be on board a satellite, the data collection device including:

    - telemetric reception means (5) able to receive by telemetry the interference ground frequency;
    - at least three antenna points (2, 3, 4) arranged on the satellite so as to be capable of receiving a radiofrequency signal from the target area;
    - processing means (6) able to determine the amplitude of the interference signal at each of the antenna points (2, 3, 4), the processing means including:

      o an agile filter (8) able to select a target frequency band in the signal received by one of the antenna points (2, 3, 4) and to convert it into a signal having an intermediate frequency band, the target frequency band containing the interference ground frequency ;
      o digital processing means (10) able to:

        ■ convert the signal having an intermediate frequency band into a digital signal and
        ■ determine a frequency bin in which the interference frequency at the satellite is located ;
        ■ determine, in this frequency bin, for each of the signals received by each of the antenna points (2, 3, 4), the interference amplitude at each of the antenna points (2, 3, 4);

    - connecting means (7) able to connect each of the antenna points (2, 3, 4) to the processing means (6).

2. The data collection device according to the preceding claim, further including transmitting means (11) able to transmit to calculating means the interference amplitudes determined at each of the antenna points (2, 3, 4).

3. The data collection device according to one of the preceding claims, further including calculating means able to determine the position of the interference source in the target area by triangulation using the amplitudes of the interference signal which are measured at each of the antenna points.

4. The data collection device according to one of the preceding claims, wherein each antenna point (2, 3, 4) has a triangular gain curve.

5. The data collection device according to one of the preceding claims, wherein each antenna point (2, 3, 4) has a cross-polarisation level higher than or equal to 27db.

6. The data collection device according to one of the preceding claims, wherein each antenna point (2, 3, 4) has two polarisation directions.

7. The data collection device according to one of the preceding claims, wherein the interference amplitude at each of the antenna points (2, 3, 4) is determined in both polarisation directions of each of the antenna points (2, 3, 4).

8. The data collection device according to one of the preceding claims, wherein each antenna point (2, 3, 4) consists of a horn antenna.

9. A data collection method for locating an interference source in a target area using three antenna points (2, 3, 4) arranged on a satellite so as to be capable of receiving a radiofrequency signal on the entire target area, the method including the following steps of:

    - receiving by telemetry the interference ground frequency;
    - receiving by each antenna point a radiofrequency signal including the interference signal the source of which is desired to be located;
    - determining the interference amplitude at each of the antenna points, the step of determining the interference amplitude at each of the antenna points (2, 3, 4) including the following steps of:
- selecting in the signal received by the first antenna point a target frequency band containing the interference ground frequency;
- converting this target frequency band into a signal having an intermediate frequency band;
- digitising the signal having an intermediate frequency band;
- determining a frequency bin in which the interference frequency at the satellite is located;
- determining, in this frequency bin, and for each of the signals received for each of the antenna points, the interference amplitude at each of the antenna points.

10. The method according to the preceding claim, wherein the step of determining a frequency bin in which the interference frequency at the satellite is located is performed by a fast Fourier transform.

11. A method for locating an interference source in a target area by triangulation using the amplitudes determined at each of the antenna points using a method according to one of claims 9 and 10.

Fig. 1

Fig. 2

Fig. 3

EP 2 762 912 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2819657